# EUROPEAN PATENT SPECIFICATION

(11) **EP 4 645 209 B1**
(45) Date of publication and mention of the grant of the patent: **14.10.2026**
(21) Application number: 23917276.0
(22) Date of filing: 13.12.2023
(51) Int. Cl.: G06N 3/04, G06N 3/045, G06N 3/0455, G06N 3/0475, G06N 3/048, G06N 3/08, G06N 3/0464, G06N 3/084, G06N 3/09, G06N 3/094, G06V 10/30, G06V 10/82, G06V 20/56, G06T 5/60, G06T 5/77

(54) **IMAGE DERAINING NETWORK, AND IMAGE DERAINING NETWORK TRAINING METHOD AND DEVICE**
BILDZERSTÖRUNGSNETZWERK UND BILDZERSTÖRUNGSNETZWERKTRAININGSVERFAHREN UND -VORRICHTUNG
RÉSEAU DE SUPPRESSION DE LA PLUIE D'UNE IMAGE, AINSI QUE PROCÉDÉ ET DISPOSITIF D'APPRENTISSAGE DE RÉSEAU DE SUPPRESSION DE LA PLUIE D'UNE IMAGE

(30) Priority: 17.01.2023 CN 202310088646
(43) Date of publication of application: 05.11.2025
(73) Proprietor: Voyah Automobile Technology Company Ltd., Wuhan, Hubei 430050 (CN)
(72) Inventor: LIU, Huikai, Wuhan, Hubei 430050 (CN); ZHAN, Tao, Wuhan, Hubei 430050 (CN); FU, Bin, Wuhan, Hubei 430050 (CN); LU, Fang, Wuhan, Hubei 430050 (CN); WANG, Junjun, Wuhan, Hubei 430050 (CN); LIU, Te, Wuhan, Hubei 430050 (CN); XIE, Wenyun, Wuhan, Hubei 430050 (CN); YANG, Ying, Wuhan, Hubei 430050 (CN); DONG, Qianyan, Wuhan, Hubei 430050 (CN); WANG, Shaozheng, Wuhan, Hubei 430050 (CN)
(74) Representative: Keller Schneider Patent- und Markenanwälte AG
(86) International application number: PCT/CN2023/138489
(87) International publication number: WO 2024/152809

(56) References cited:
- CN-A- 111 861 935
- CN-A- 112 184 573
- CN-A- 114 612 316
- CN-A- 115 311 155
- CN-A- 115 984 143
- US-A1- 2019 050 969
- QING GUO ET AL: "Uncertainty-Aware Cascaded Dilation Filtering for High-Efficiency Deraining", ARXIV.ORG, CORNELL UNIVERSITY LIBRARY, 201 OLIN LIBRARY CORNELL UNIVERSITY ITHACA, NY 14853, 7 January 2022 (2022-01-07), XP091131502
- SCHLOSSER MICHAEL ET AL: "A Framework for Benchmarking Real-Time Embedded Object Detection", 20 September 2022, 20220920, PAGE(S) 545 - 559, XP047634421
- CHEN DONGDONG ET AL: "Gated Context Aggregation Network for Image Dehazing and Deraining", 2019 IEEE WINTER CONFERENCE ON APPLICATIONS OF COMPUTER VISION (WACV), IEEE, 7 January 2019 (2019-01-07), pages 1375 - 1383, XP033525647, DOI: 10.1109/WACV.2019.00151

## Description

### Cross-Reference to Related Application

The present disclosure claims priority to Chinese Patent Application No. 202310088646.9, entitled "Image Deraining Network, and Image Deraining Network Training Method and Device", filed with the China National Intellectual Property Administration on January 17, 2023.

### TECHNICAL FIELD

The present disclosure relates to the field of image processing technology, and in particular to an image deraining network, and an image deraining network training method and device.

### BACKGROUND

Qing Gue et al., "Uncertainity-Aware Cascaded Dilation Filtering for High-Efficiency Deraining" (Journal of Latex Class Files, Vol. 14, No. 8, 2015) discloses a deraining method which converts the deraining problem into a predictive filtering problem. It adopts a two-stage convolutional network architecture based on the UNet backbone, where the first network predicts a pixel-wise kernel from a rainy image and performs convolution to obtain a preliminary derained image, and the second network further optimizes the kernel based on the preliminary result to generate a final derained image. This application also introduces dilated convolution in a multi-scale filtering module to handle raindrops of different sizes and mentions the application prospect in vision-based autonomous driving.

Michael Schlosser et al., "A Framework for Benchmarking Real-Time Embedded Object Detection" (Hensoldt Optotronics GmbH, 2022) focuses on the benchmarking of real-time embedded object detection and discloses key technical means for deploying deep learning models on embedded hardware. Specifically, the deployment effect of the model on the NVIDIA Jetson AGX Xavier platform is verified and confirms that 8-bit integer quantization can significantly reduce inference latency and power consumption while maintaining acceptable accuracy.

Chen Dongdong et al., "Gated Context Aggregation Network for Image Dehazing and Deraining" (2019 IEEE Winter Conference on Applications of Computer Vision, 2019) proposes a Gated Context Aggregation Network (GCANet) for both image dehazing and deraining, which adopts an auto-encoder structure and introduces smoothed dilated convolution to eliminate grid artifacts. Multi-scale feature fusion is realized through a gated fusion sub-network, which improves the ability to retain image details.

In a scenario where a panoramic imaging system is used to assist driving and parking, if raindrops are present on a surround view camera, raindrops are also present in images captured by the surround view camera, which seriously interferes with the judgment of surrounding obstacles and lane markings by a person and an in-vehicle system, thereby affecting the person's experience with the panoramic imaging system and increasing the difficulty of downstream visual task processing by the in-vehicle system.

Currently, a generative adversarial network is usually used to remove raindrops from images. This solution has the problem that, after raindrop removal from a single-frame image, noticeable residual traces remain, and the deraining precision is relatively low.

### SUMMARY OF THE INVENTION

The present invention is defined by the appended claims. Embodiments of the present disclosure provide an image deraining network, by means of which the precision of image deraining can be improved.

Other features and advantages of the present disclosure will become apparent from the following detailed description, or will be learned in part through practice of the present disclosure.

According to a first aspect of the embodiments of the present disclosure, there is provided an image deraining network. The image deraining network may include a first convolutional network and a second convolutional network, wherein
the first convolutional network is configured to perform prediction using an image to be derained on the basis of an improved UNet network, and perform pixel-by-pixel convolution on a first deraining filter kernel obtained by
the prediction and the image to be derained to obtain a first derained image; and
the second convolutional network is configured to perform prediction using the first derained image on the basis of the improved UNet network, and perform pixel-by-pixel convolution on a second deraining filter kernel obtained by the prediction and the first derained image to obtain a target derained image.

According to a second aspect of the embodiments of the present disclosure, there is provided an image deraining network training method. The training method may include: obtaining raindrop-free images and images to be derained captured by a vehicle at the same geographic location; and inputting the images to be derained and the raindrop-free images into the image deraining network described above to train the network and obtain a trained image deraining network.

According to a third aspect of the embodiments of the present disclosure, there is provided an image deraining network training device. The image deraining network training device may include a memory and a processor, wherein the memory stores a computer program that, when executed by the processor, causes the steps of the method described above to be implemented.

According to a fourth aspect of the embodiments of the present disclosure, there is provided a computer-readable storage medium configured to store a computer program, wherein the computer program, when executed by a processor, causes the steps of the method described above to be implemented.

It should be understood that the above general description and the following detailed description are merely exemplary and explanatory, and do not limit the present disclosure.

### BRIEF DESCRIPTION OF THE DRAWINGS

The drawings here are incorporated into and constitute a part of the specification, illustrate embodiments conforming to the present disclosure, and are used together with the specification to explain the principles of the present disclosure. Obviously, the drawings described below merely represent some embodiments of the present disclosure, and those of ordinary skill in the art can obtain other drawings according to these drawings without creative efforts. In the drawings:
Fig. 1 shows a structural block diagram of an image deraining network according to one or more implementations of the present disclosure;
Fig. 2 shows a schematic structural diagram of the image deraining network in Fig. 1;
Fig. 3 shows a structural block diagram of a channel attention module according to one or more implementations of the present disclosure;
Fig. 4 shows a structural block diagram of a spatial attention module according to one or more implementations of the present disclosure;
Fig. 5 shows a schematic flow diagram of an image deraining network training method according to one or more implementations of the present disclosure;
Fig. 6 shows a schematic diagram of an effect of removing small raindrops from an image in a test set by an image deraining network according to one or more implementations of the present disclosure;
Fig. 7 shows a schematic diagram of an effect of removing large raindrops from an image in a test set by an image deraining network according to one or more implementations of the present disclosure;
Fig. 8 shows a structural block diagram of an image deraining network training apparatus according to one or more implementations of the present disclosure; and
Fig. 9 shows an internal structure diagram of an image deraining network training device according to one or more implementations of the present disclosure.

### DETAILED DESCRIPTION

The technical solutions in the embodiments of the present disclosure will be described below clearly and completely in conjunction with the accompanying drawings in the embodiments of the present disclosure. Apparently, the embodiments described are merely some rather than all of the embodiments of the present disclosure. All other embodiments obtained by those of ordinary skill in the art based on the embodiments of the present disclosure without creative efforts fall within the scope of protection of the present disclosure.

In addition, the features, structures or characteristics described may be combined in one or more embodiments in any suitable manner. In the following description, numerous specific details are provided to facilitate a thorough understanding of the embodiments of the present disclosure. However, those skilled in the art will recognize that the technical solutions of the present disclosure may be practiced without one or more of the specific details, or with other methods, components, apparatuses, steps, and the like. In other cases, well-known methods, apparatuses, implementations, or operations are not shown or described in detail to avoid obscuring the aspects of the present disclosure.

The block diagrams shown in the accompanying drawings merely represent functional entities, and do not necessarily correspond to physically separate entities. That is, the functional entities may be implemented in the form of software, or the functional entities may be implemented in one or more hardware modules or integrated circuits, or the functional entities may be implemented across different networks and/or processor apparatuses and/or microcontroller apparatuses.

The flow diagrams shown in the accompanying drawings are merely exemplary illustrations, and do not necessarily include all contents and operations/steps, nor are they necessarily executed in the order described. For example, some operations/steps may be further divided, while other operations/steps may be merged or partially merged, and therefore, the actual execution order may vary depending on specific circumstances.

It is to be noted that the terms "first", "second" and the like in the specification and claims of the present disclosure and the above-described drawings are used to distinguish similar objects, and are not necessarily used to describe a particular order or sequence. It should be understood that objects so used may be interchanged under appropriate circumstances so that the embodiments of the present disclosure described herein can be implemented in an order other than those illustrated or described.

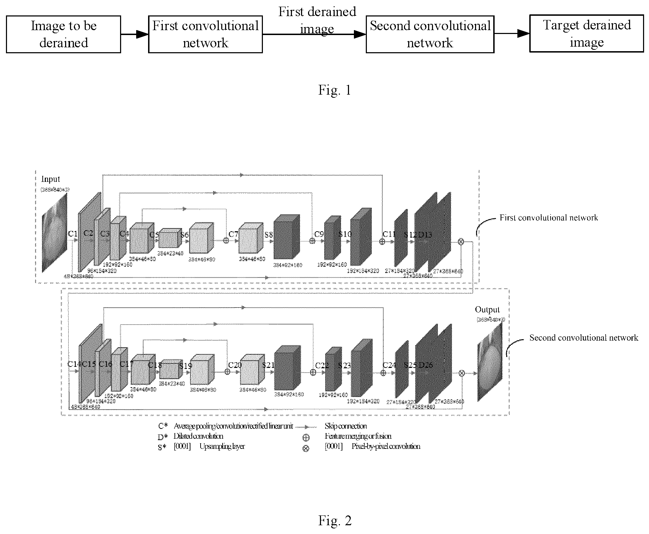

Fig. 1 is a structural block diagram of an image deraining network in an embodiment.

As shown in Fig. 1, an embodiment of the present disclosure provides an image deraining network. The image deraining network may include a first convolutional network and a second convolutional network. The first convolutional network is configured to perform prediction using an image to be derained on the basis of an improved UNet network, and perform pixel-by-pixel convolution on a first deraining filter kernel obtained by the prediction and the image to be derained to obtain a first derained image. The second convolutional network is configured to perform prediction using the first derained image on the basis of the improved UNet network, and perform pixel-by-pixel convolution on a second deraining filter kernel obtained by the prediction and the first derained image to obtain a target derained image.

It should be understood that, given the wide application of generative adversarial networks in image restoration, raindrop removal from an image is typically performed by inputting the image to be derained into a trained generative adversarial network to obtain a derained image output from the generative adversarial network. However, noticeable residual traces remain in the derained image obtained using the generative adversarial network, and the deraining effect is poor. This embodiment uses an improved UNet network to construct two convolutional networks, and uses the two convolutional networks as an image deraining network. The first convolutional network performs rough deraining, and the second convolutional network performs precise deraining. This achieves higher precision compared with using a single-stage network for deraining. In the convolutional networks, a deraining filter kernel for each pixel of an input image is predicted using the UNet network, and then the deraining filter kernel is convolved pixel by pixel with the input image. Compared with the generative adversarial network, this can both obtain more features in raindrop regions and compensate for a loss of information in feature maps transmitted from previous layers during image restoration, thereby achieving a better deraining effect.

The improved UNet network is a network based on a UNet network, and can extract the features in the raindrop regions by downsampling, and then restore the image to its original size by upsampling, thereby achieving feature extraction from the raindrop regions of the input image, i.e., obtaining the deraining filter kernel for each pixel of the input image. The specific network structure of the improved UNet network is not limited in this embodiment.

In some implementations, the pixel-by-pixel convolution on the first deraining filter kernel and the image to be derained refers to an operation in which each pixel of the image to be derained is convolved with elements in the first deraining filter kernel that correspond to the pixel. The pixel-by-pixel convolution on the second deraining filter kernel and the first derained image may be implemented in the same way, and will not be described here.

In other implementations, raindrop image datasets from different scenarios, with diverse quantities and sizes, i.e., with different degrees of distortion, may be collected. The image datasets are sequentially divided into a training set, a validation set, and a test set in a quantity ratio of 3:1:1. The first two are respectively used for training, hyperparameter adjustment, and preliminary evaluation of the image deraining network, and the last is used for assessment after the training of the image deraining network is completed. After completion of the training of the image deraining network, a current raindrop image captured by a vehicle is input into the trained image deraining network, and a derained image output from the network may be obtained.

According to this embodiment, a first convolutional network and a second convolutional network are designed in an image deraining network, wherein the first convolutional network is configured to perform prediction using an image to be derained on the basis of an improved UNet network, and perform pixel-by-pixel convolution on a first deraining filter kernel obtained by the prediction and the image to be derained to obtain a first derained image; and the second convolutional network is configured to perform prediction using the first derained image on the basis of the improved UNet network, and perform pixel-by-pixel convolution on a second deraining filter kernel obtained by the prediction and the first derained image to obtain a target derained image. By designing the image deraining network as two convolutional networks constructed on the basis of the improved UNet network, and using the image deraining network for deraining the image to be derained, the precision of image deraining can be effectively improved.

Fig. 2 is a schematic structural diagram of the image deraining network in Fig. 1.

The first convolutional network and the second convolutional network in the image deraining network use the same improved UNet network. For ease of differentiation and description, different reference numerals are used in the specific structures in the first convolutional network and the second convolutional network in Fig. 2. The following explanation is focused on the improved UNet network in the first convolutional network as an example. As shown in Fig. 2, in an example, the improved UNet network may sequentially include a first network layer C1 to a thirteenth network layer D13. The first network layer C1, the second network layer C2, the third network layer C3, the fourth network layer C4, the fifth network layer C5, the seventh network layer C7, the ninth network layer C9, and the eleventh network layer C11 are all composite layers. The sixth network layer S6, the eighth network layer S8, the tenth network layer S10, and the twelfth network layer S12 are upsampling layers. The thirteenth network layer D13 is a dilated convolutional layer. Each composite layer may include two or more of an average pooling layer, a convolutional layer, and an activation layer.

It should be understood that as the image to be derained undergoes operations of the first network layer C1 to the fifth network layer C5, the size of a feature map is gradually reduced, and subsequently, with operations of the seventh network layer C7 to the twelfth network layer S12, the size of the feature map is gradually increased, that is, the size of the original image is restored by upsampling after downsampling, and an output from the first convolutional network is used as an input to the second convolutional network, and a deraining filter kernel obtained by the second prediction is convolved pixel by pixel with the input to obtain a final refined output, i.e., a target derained image from which raindrops are finally removed.

In this embodiment, the first network layer C1, the second network layer C2, the third network layer C3, the fourth network layer C4, the fifth network layer C5, the seventh network layer C7, the ninth network layer C9, and the eleventh network layer C11 are all designed with a dilated convolution, wherein dilation rates of the second network layer C2, the third network layer C3, the fourth network layer C4, the seventh network layer C7, the ninth network layer C9, and the eleventh network layer C11 are all greater than 1.

Convolution kernel sizes and convolution strides of the first network layer C1, the second network layer C2, the third network layer C3, the fourth network layer C4, the fifth network layer C5, the seventh network layer C7, the ninth network layer C9, and the eleventh network layer C11 may be designed according to the specific circumstances. For example, the convolution kernel sizes may all be 3, and the convolution strides may all be 1. This is not limited in this embodiment.

By designing dilated convolutions for the above-mentioned network layers, a receptive field of the image deraining network is increased, and the capability of perceiving differentiated features in neighborhood regions of raindrop pixels is improved.

In an embodiment, dilation rates of the first network layer C1 to the fourth network layer C4, the fifth network layer C5, the seventh network layer C7, the ninth network layer C9, and the eleventh network layer C11 increase in a sawtooth pattern.

For example, the dilation rates of the first network layer C1, the second network layer C2, the third network layer C3, and the fourth network layer C4 sequentially correspond to 1, 2, 3, and 5, and the dilation rates of the fifth network layer C5, the seventh network layer C7, the ninth network layer C9, and the eleventh network layer C11 sequentially correspond to 1, 2, 3, and 4.

In some implementations, the first network layer C1 may be composed of a dilated convolution with a dilation rate of 1 and a rectified linear unit (ReLU) layer, and the second network layer C2 to the fifth network layer C5 first perform average pooling operations based on the first network layer C1.

The improved UNet network in the second convolutional network may include a fourteenth network layer C14 (corresponding to the first network layer C1), a fifteenth network layer C15 (corresponding to the second network layer C2), a sixteenth network layer C16 (corresponding to the third network layer C3), a seventeenth network layer C17 (corresponding to the fourth network layer C4), an eighteenth network layer C18 (corresponding to the fifth network layer C5), a nineteenth network layer S19 (corresponding to the sixth network layer S6), the twentieth network layer C20 (corresponding to the seventh network layer C7), the twenty-first network layer S21 (corresponding to the eighth network layer S8), the twenty-second network layer C22 (corresponding to the ninth network layer C9), the twenty-third network layer S23 (corresponding to the tenth network layer S10), the twenty-fourth network layer C24 (corresponding to the eleventh network layer C11), the twenty-fifth network layer S25 (corresponding to the twelfth network layer S12), and the twenty-sixth network layer D26 (corresponding to the thirteenth network layer D13). For its structural design, reference may be made to the improved UNet network in the first convolutional network, and it will not be described here.

It is to be noted that currently, convolutional neural networks (CNN) and GAN networks based on kernel prediction networks (KPN) tend to produce unstable derained video frames with "flickering" artifacts. In this embodiment, by designing multi-layer dilated convolutions with different dilation rates such that receptive fields of the multi-layer dilated convolutions are not the same, multi-scale features corresponding to raindrops of different sizes can be obtained, so that the convolutional networks better perceive pixel differences between adjacent frames, to stably handle changes of raindrop and background pixels between the adjacent frames. By designing the dilation rates in a sawtooth pattern, a grid effect resulting from losing too much information can be effectively avoided while increasing the receptive field.

In an embodiment, the second network layer C2 and the tenth network layer S10 are connected via a skip connection; the third network layer C3 and the eighth network layer S8 are connected via a skip connection; and the fourth network layer C4 and the sixth network layer S6 are connected via a skip connection.

In some implementations, the skip connection between the second network layer C2 and the tenth network layer S10 can achieve channel fusion between a feature map output by the second network layer C2 and a feature map obtained by upsampling an output of the ninth network layer C9 (i.e., a feature map output by the tenth network layer S10); the skip connection between the third network layer C3 and the eighth network layer S8 can achieve channel fusion between a feature map output by the third network layer C3 and a feature map obtained by upsampling an output of the seventh network layer C7 (i.e., a feature map output by the eighth network layer S8); and the skip connection between the fourth network layer C4 and the sixth network layer S6 can achieve channel fusion between a feature map output by the fourth network layer C4 and a feature map obtained by upsampling an output of the fifth network layer C5 (i.e., a feature map output by the sixth network layer S6).

By designing the skip connection structures in the process of predicting the deraining filter kernels through the first convolutional network and the second convolutional network, not only can the problem of gradient vanishing or explosion caused by network deepening during training be prevented, but also a loss of information in feature maps transmitted from previous layers can be compensated for during image restoration.

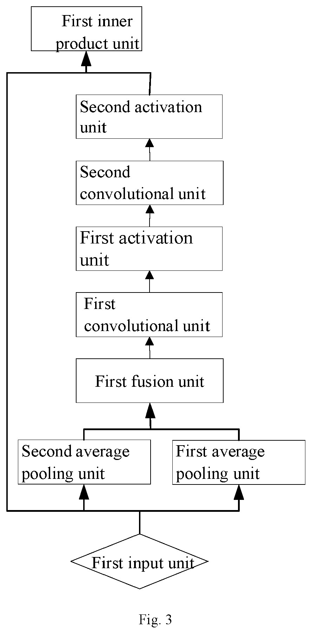

Fig. 3 is a schematic structural diagram of a channel attention module in an embodiment. Referring to both Figs. 2 and 3, the seventh network layer C7 may include a channel attention module. The channel attention module may include a first input unit, a first average pooling unit, a second average pooling unit, a first fusion unit, a first convolutional unit, a first activation unit, a second convolutional unit, a second activation unit, and a first inner product unit. The first input unit is connected to the first average pooling unit, the second average pooling unit, and the first inner product unit, respectively. The first average pooling unit and the second average pooling unit are both connected to the first fusion unit. The first fusion unit is connected to the first inner product unit sequentially through the first convolutional unit, the first activation unit, the second convolutional unit, and the second activation unit.

It should be understood that a feature map output by the seventh network layer C7 is subjected to average pooling processing via the first average pooling unit and the second average pooling unit. The processed feature map sequentially undergoes channel fusion via the first fusion unit, a convolutional operation via the first convolutional unit, activation with a ReLU activation function via the first activation unit, a convolutional operation via the second convolutional unit, and activation with a Sigmoid activation function via the second activation unit, and is then subjected to inner product processing with the feature map output by the seventh network layer C7 via the first inner product unit. Finally, a feature map is output.

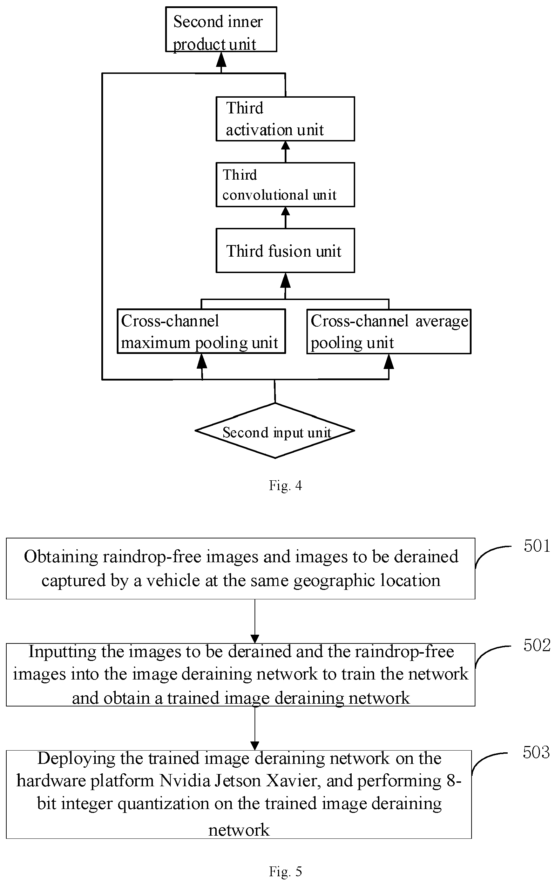

Fig. 4 is a schematic structural diagram of a spatial attention module in an embodiment. Referring to both Figs. 2 and 4, the eleventh network layer C11 may include a spatial attention module. The spatial attention module may include a second input unit, a cross-channel average pooling unit, a cross-channel maximum pooling unit, a second fusion unit, a third convolutional unit, a third activation unit, and a second inner product unit. The second input unit is connected to the cross-channel average pooling unit, the cross-channel maximum pooling unit, and the second inner product unit, respectively. The cross-channel average pooling unit and the cross-channel maximum pooling unit are both connected to the second fusion unit. The second fusion unit is connected to the second inner product unit sequentially through the third convolutional unit and the third activation unit.

It should be understood that a feature map output by the eleventh network layer C11 is subjected to pooling processing via the cross-channel average pooling unit and the cross-channel maximum pooling unit, respectively. The processed feature map sequentially undergoes channel fusion via the third fusion unit, a convolutional operation via the third convolutional unit, and activation with a Sigmoid activation function via the third activation unit, and is then subjected to inner product processing with the feature map output by the eleventh network layer C11 via the second inner product unit. Finally, a feature map is output.

The feature map output by the eleventh network layer C11 is upsampled and then subjected to a dilated convolution with a kernel size of 1, a stride of 1, a padding of 0, and a dilation rate of 2 to obtain a first deraining filter kernel. The filter kernel is convolved pixel by pixel with the image to be derained that is transmitted through the skip connection, to obtain a first derained image.

It should be understood that due to a large number of channels of a feature map input to the seventh network layer C7 and a large size of a feature map input to the eleventh network layer C11 during the skip connection process, in order to fully utilize the performance of an attention mechanism and reduce the computational amount of the model, a channel attention mechanism is added only to the seventh network layer C7, and a spatial attention mechanism is added only to the eleventh network layer C11. By adding the channel attention mechanism and the spatial attention mechanism to the improved UNet network, the image deraining network pays more attention to the features in the raindrop regions, and increases the differentiation between raindrops and a background region in the input image to be derained, thereby improving the precision of the model in image deraining.

In the present disclosure, a first convolutional network and a second convolutional network are designed in an image deraining network, wherein the first convolutional network is configured to perform prediction using an image to be derained on the basis of an improved UNet network, and perform pixel-by-pixel convolution on a first deraining filter kernel obtained by the prediction and the image to be derained to obtain a first derained image; and the second convolutional network is configured to perform prediction using the first derained image on the basis of the improved UNet network, and perform pixel-by-pixel convolution on a second deraining filter kernel obtained by the prediction and the first derained image to obtain a target derained image. By designing the image deraining network as two convolutional networks constructed on the basis of the improved UNet network, and using the image deraining network for deraining the image to be derained, the precision of image deraining can be effectively improved.

Fig. 5 shows a schematic flow diagram of an image deraining network training method in an embodiment. As shown in Fig. 5, an image deraining network training method is provided. This embodiment is described by way of example in which the method is applied to a terminal. It may be understood that the method may also be applied to a server, or to a system including a terminal and a server, and may be implemented by interaction between the terminal and the server. In this embodiment, the image deraining network training method may include the following steps:
Step 501: obtaining raindrop-free images and images to be derained captured by a vehicle at the same geographic location.

In some implementations, the vehicle collects raindrop image datasets in different scenarios, with diverse quantities and sizes (i.e., with different degrees of distortion). In some implementations, it may be done as follows: a raindrop-free photo is taken as true-value data while the vehicle is parked, respectively in various scenarios such as in outdoor environments on cloudy days in the evening, in underground parking lots, in outdoor environments on sunny days during the daytime, and in outdoor environments at night, then water droplets are manually sprayed onto a rear-view lens of the vehicle at a minimum flow rate by using a watering can with an adjustable flow rate, and at this time, a photo is taken as small raindrop data, the raindrops are erased from the lens, the flow rate is increased by one level and then water droplets continue to be sprayed onto the lens, a photo is taken at this time as large raindrop data, and then the raindrops on the lens are erased again; and the vehicle is driven to a different location, and the above-described collection process is repeated until the amount of data meets the predetermined requirement.

The terminal obtains the collected data from the vehicle, and pairs distortion data (i.e., images to be derained) and corresponding true-value data (i.e., raindrop-free images) from the same geographic location one by one to obtain datasets in groups. The terminal can sequentially divide the collected dataset into a training set, a validation set, and a test set in a quantity ratio of 3:1:1. The first two are respectively used for training, hyperparameter adjustment, and preliminary evaluation of the network, and the last is used for assessment after the training of the network is completed.

Step 502: inputting the images to be derained and the raindrop-free images into the image deraining network described above to train the network and obtain a trained image deraining network.

In some implementations, after an image to be derained is input into the image deraining network, the image is successively passed through a first convolutional network and a second convolutional network to obtain a target derained image from which raindrops are removed. During training, a loss value is calculated between the target derained image and an input raindrop-free image, and parameters of the network are continuously adjusted through training iterations. During inference, the target derained image is directly used as a final output image.

Referring to both Figs. 2 and 5, in an embodiment, an image shape value of the image to be derained is 368*640*3. After being input into the image deraining network, the image is preprocessed to obtain a preprocessed image. Preprocessing steps may include BGR to RGB conversion, normalization to [0, 1], mean subtraction (0.306, 0.309, 0.300), and variance division (0.150, 0.155, 0.162), etc. Mean and variance values are calculated on the training set. The second convolutional network reuses the first convolutional network. Only the first convolutional network is specifically described here, in which an improved UNet network structure is used to predict a first deraining filter kernel, and then a pixel-by-pixel convolution operation is performed on the filter kernel and the image to be derained to obtain a first derained image. Channel and spatial attention mechanisms and a design of multi-layer dilated convolutions with different dilation rates are added to the first convolutional network. This increases the model's differentiation between raindrops and a background and its capability of perceiving differentiated features in neighborhood regions of pixels. A network structure of the first convolutional network is shown in the upper half of Fig. 2. A first network layer C1, a second network layer C2, a third network layer C3, a fourth network layer C4, a fifth network layer C5, a seventh network layer C7, a ninth network layer C9, and an eleventh network layer C11 are all designed with a dilated convolution, and their kernel sizes are all 3 and their strides are all 1. While increasing the receptive field, in order to avoid losing too much information and producing a grid effect, the dilation rates of the dilated convolutions in the 8 network layers are here designed as a sawtooth structure, with the values of 1, 2, 3, and 5 sequentially. The first network layer is composed of a dilated convolution with a dilation rate of 1 and a ReLU layer, and the second network layer C2 to the fifth network layer C5 first perform average pooling operations based on the first network layer C1. Feature maps output by the second network layer C2, the third network layer C3, and the fourth network layer C4 are respectively subjected to channel fusion with feature maps obtained by upsampling outputs of the ninth network layer C9, the seventh network layer C7, and the fifth network layer C5 through skip connections. Considering a large number of channels of a feature map input to the seventh network layer C7 and a large size of a feature map input to the eleventh network layer C11 during the skip connection process, a channel attention mechanism is added to the seventh network layer C7, and a spatial attention mechanism is added only to the eleventh network layer C11. A feature map output by the eleventh network layer C11 is upsampled and then subjected to a dilated convolution with a kernel size of 1, a stride of 1, a padding of 0, and a dilation rate of 2 to obtain a first deraining filter kernel. The filter kernel is convolved pixel by pixel with the image to be derained that is transmitted through the skip connection, to obtain a first derained image. As the preprocessed image undergoes operations of the first network layer C1 to the fifth network layer C5, the size of a feature map is gradually reduced, and subsequently, with operations of the seventh network layer C7 to the twelfth network layer S12, the size of the feature map is gradually increased, that is, the size of the original image is restored by upsampling after downsampling. An output from the first convolutional network is used as an input to the second convolutional network, and a second deraining filter kernel obtained by the second prediction is convolved pixel by pixel with the input to obtain a final refined output, i.e., a target derained image. A pre-set loss function may be used during training of the network. In network iterative training, and parameters are continuously updated through backpropagation of a loss value. When the training converges, the training is terminated, resulting in a trained image deraining network.

In some implementations, the loss function may be expressed by the following formula: $Loss = {Loss}_{SSIM} + {λLoss}_{PSNR} ;$ ${Loss}_{PSNR} = 10 * {log}_{10} \left(\frac{{{MAX}_{I}}^{2}}{MSE}\right) ;$ ${Loss}_{SSIM} = {\left[l\left(x, y\right)\right]}^{α} {\left[c\left(x, y\right)\right]}^{β} {\left[s\left(x, y\right)\right]}^{γ} ;$ wherein $MSE = \frac{1}{mn} {\sum }_{i = 0}^{m - 1} {\sum }_{j = 0}^{n - 1} {\left[I \left(i, j\right)-K\left(i, j\right)\right]}^{2} ;$ $l \left(x, y\right) = \frac{2 {μ}_{x} {μ}_{y} + {c}_{1}}{{{μ}_{x}}^{2} + {{μ}_{y}}^{2} + {c}_{1}} ;$ $c \left(x, y\right) = \frac{2 {σ}_{xy} + {c}_{2}}{{{σ}_{x}}^{2} + {{σ}_{y}}^{2} + {c}_{2}} ;$ $s \left(x, y\right) = \frac{{σ}_{xy} + {c}_{3}}{{σ}_{xy} + {c}_{3}} ;$ wherein MAX_{I} is a maximum pixel value of the target derained image, m and n are respectively a width and a height of the target derained image, I(i, j) is a pixel value of a raindrop-free image, K(i,j) is a pixel value of the image to be derained, *µₓ* is an average value of the raindrop-free image, *µ*_{y} is an average value of the image to be derained, *σₓ* is a standard deviation of the raindrop-free image, *σ*_{y} is a standard deviation of the image to be derained, σ_{*x*y} is a covariance of the image to be derained, and C1, C2, C3, and *λ* are constants. In some implementations, the following values may be used: *λ* = 0.03, *α* = *β* = *γ* = 1, and C3 = C2/2.

When the image deraining network trained in the above-described solution is used for image deraining, the problems that noticeable residual traces remain after raindrop removal from a single-frame image, and "flickering" occurs in frames after raindrop removal from consecutive multi-frame images can be effectively solved. The image deraining network has the characteristics of high precision in deraining a single-frame image, and stable and smooth frames in deraining multi-frame images.

In an embodiment, the image deraining network training method may further include the following step:
Step 503: deploying the trained image deraining network on the hardware platform Nvidia Jetson Xavier, and performing 8-bit integer quantization on the trained image deraining network.

In some implementations, the trained image deraining network is a model in .pth format, which may be converted into a model in .onnx format, and then further quantized into a model in .trt format of the int8 data type through the tensorrt inference library on the hardware platform Nvidia Jetson Xavier. When tested on the test set, the model achieves an inference speed greater than 30 frames per second, and its peak signal to noise ratio (PSNR) and structural similarity (SSIM) results are shown in Table 1 below.

**Table 1**

| Test set | PSNR | | | | SSIM | | | |
|---|---|---|---|---|---|---|---|---|
| | Outdoor environment s on cloudy days in the evening | Undergroun d parking lots | Outdoor environment s on sunny days during the daytime | Outdoor environment s at night | Outdoor environment s on cloudy days in the evening | Undergroun d parking lots | Outdoor environment s on sunny days during the daytime | Outdoor environment s at night |
| Small raindro p data | 29.438 | 30.060 | 30.809 | 33.035 | 0.900 | 0.920 | 0.918 | 0.959 |
| Large raindro p data | 26.578 | 27.270 | 27.990 | 29.528 | 0.855 | 0.889 | 0.887 | 0.946 |

As can be seen from Table 1, both PSNR and SSIM values are relatively high when the trained image deraining network is used to remove small or large raindrops from images in the test set, which shows that the trained image deraining network has the advantage of high precision in deraining in a single frame.

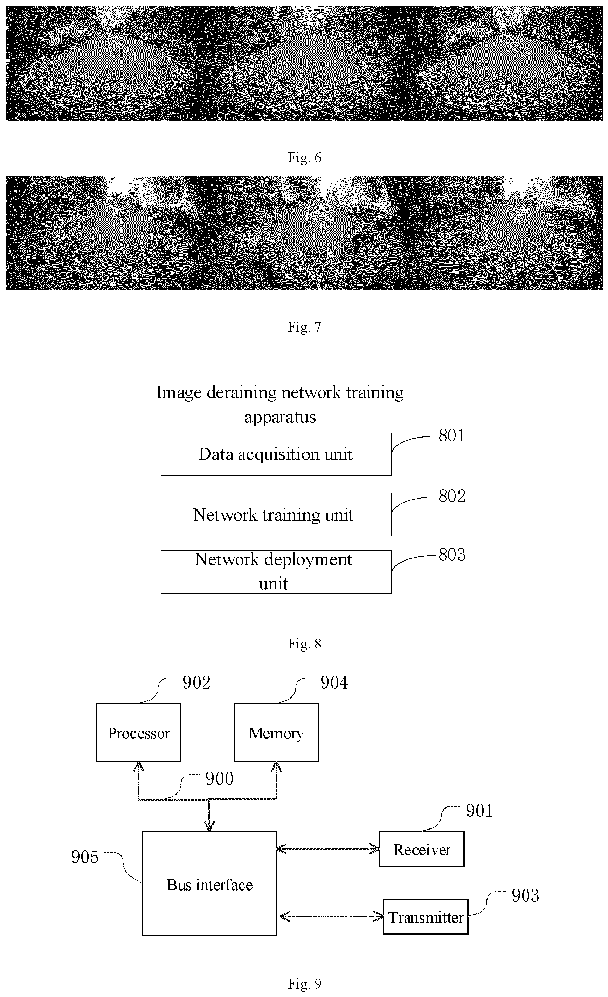

Fig. 6 is a schematic diagram of an effect of removing small raindrops from an image in a test set by using a trained image deraining network in an embodiment, showing, sequentially from left to right, a raindrop-free image, an image to be derained with small raindrops in the test set, and a target derained image after the raindrops are removed. Fig. 7 is a schematic diagram of an effect of removing large raindrops from an image in a test set by using a trained image deraining network in an embodiment, showing, sequentially from left to right, a raindrop-free image, an image to be derained with large raindrops in the test set, and a target derained image after the raindrops are removed.

As shown in Figs. 6 and 7, when the small or large raindrops are removed from the image to be derained by using the trained image deraining network, there is basically no "flickering" in frames in the processing of changing backgrounds and raindrops, and thus, the network has the advantage of producing stable and smooth derained images.

By deploying the trained image deraining network on the hardware platform Nvidia Jetson Xavier, and performing 8-bit integer quantization on the trained image deraining network, the final model achieves a faster inference speed, which can satisfy the real-time requirement of model deployment on Nvidia Jetson Xavier, and greatly improve the user's experience of use.

It should be understood that although the steps in the flow diagrams involved in the embodiments as described above are illustrated sequentially as indicated by arrows, the steps are not necessarily executed sequentially in the order indicated by the arrows. Unless expressly stated herein, there is no strict sequential limitation on the execution of the steps, and the steps may be executed in other orders. Moreover, at least a portion of the steps in the flow diagrams involved in the embodiments as described above may include multiple steps or multiple phases. These steps or phases are not necessarily executed or completed at the same time, but may be executed at different times. These steps or phases are not necessarily executed in a sequential order, but may be executed in turn or alternately with at least a portion of steps or phases in another step.

In an embodiment, as shown in Fig. 8, there is provided an image deraining network training apparatus, which may include a data acquisition unit 801 and a network training unit 802.

The data acquisition unit 801 is configured to obtain raindrop-free images and images to be derained captured by a vehicle at the same geographic location.

The network training unit 802 is configured to input the images to be derained and the raindrop-free images into the image deraining network described above to train the network and obtain a trained image deraining network.

In some embodiments of the present disclosure, based on the solution described above, the image deraining network training apparatus further includes a network deployment unit 803 configured to deploy the trained image deraining network on the hardware platform Nvidia Jetson Xavier, and perform 8-bit integer quantization on the trained image deraining network.

The modules in the image deraining network training apparatus described above may be implemented entirely or partly by software, hardware, and a combination thereof. The modules described above may be embedded in or independent of a processor in a computer device in hardware form, or may be stored in a memory in a computer device in software form, so as to be invoked by the processor to perform the operations corresponding to the modules described above.

Based on the same inventive concept, an embodiment of the present disclosure further provides an image deraining network training device. Fig. 9 is an internal structure diagram of an image deraining network training device in an embodiment. As shown in Fig. 9, the image deraining network training device may include one or more memories 904, one or more processors 902, and at least one computer program (program code) stored on the memory 904 and executable on the processor 902. The computer program, when executed by the processor 902, causes the image deraining network training method as described above to be implemented.

In Fig. 9, which shows a bus architecture (represented by a bus 900), the bus 900 may include any number of interconnected buses and bridges, and the bus 900 links various circuits together including one or more processors represented by a processor 902 and memories represented by a memory 904. The bus 900 may also links various other circuits together such as peripheral devices, voltage stabilizer and power management circuits, which are all known in the art and thus not further described herein. A bus interface 905 provides interfacing between the bus 900, and a receiver 901 and a transmitter 903. The receiver 901 and the transmitter 903 may be a same element, i.e. a transceiver, providing a unit for communicating with various other apparatuses over a transmission medium. The processor 902 is responsible for managing the bus 900 and general processing, and the memory 904 may be configured to store data used when the processor 902 performs operations.

Those skilled in the art may understand that the structure shown in Fig. 9 is merely a block diagram of the structure of a relevant part to the solution of the present disclosure, and does not limit the image deraining network training device to which the solution of the present disclosure is applied. The image deraining network training device in some implementations may include more or fewer components than those shown in the figure, or combine certain components, or have a different component arrangement.

In an embodiment, there is provided a computer-readable storage medium configured to store a computer program, wherein the computer program, when executed by a processor, causes the following steps to be implemented:
obtaining raindrop-free images and images to be derained captured by a vehicle at the same geographic location; and
inputting the images to be derained and the raindrop-free images into the image deraining network described above to train the network and obtain a trained image deraining network.

In an embodiment, the computer program, when executed by the processor, also causes the following step to be implemented:
deploying the trained image deraining network on the hardware platform Nvidia Jetson Xavier, and performing 8-bit integer quantization on the trained image deraining network.

The functions described herein may be implemented in hardware, software executed by a processor, firmware, or any combination thereof. If implemented in software executed by a processor, the functions may be stored on or transmitted via a computer-readable medium as one or more instructions or code. Other examples and embodiments are within the scope of the appended claims. By way of example, attributable to the nature of software, the functions described above may be implemented using software executed by a processor, hardware, firmware, hardwiring, or any combination thereof. In addition, the functional units may be integrated in one processing unit, or may be physically separate as individual units, or two or more units may be integrated in one unit.

In the several embodiments provided in the present disclosure, it should be understood that the disclosed technical content may be implemented in other manners. The apparatus embodiments described above are merely illustrative. For example, the division of the units may be a logical function division, and there may be other division manners in actual implementations. For example, multiple units or components may be combined or may be integrated into another system, or some features can be omitted or not executed. In addition, the mutual coupling or direct coupling or communicative connection as shown or discussed may be achieved by some interfaces, and the indirect coupling or communicative connection between units or modules may be in an electrical or other form.

The units described as separate components may or may not be physically separate, and components as control apparatuses may or may not be physical units, i.e. may be located in one place, or may be distributed across multiple units. Some or all of the units may be selected according to actual needs to achieve the object of the solution of the embodiments.

The integrated units may be stored in a computer -readable storage medium if implemented in the form of a software functional unit and sold or used as a separate product. Based on such understanding, the technical solution of the present disclosure, in essence, or the part that contributes to the prior art, or all or part of the technical solution, may be embodied in the form of a software product, and the computer software product is stored in a storage medium, and may include a number of instructions configured to cause a computer device (which may be a personal computer, a server, a network device or the like) to execute all or part of the steps of the method in the embodiments of the present disclosure. The above-mentioned storage medium may include: a USB flash disk, a read-only memory (ROM), a random access memory (RAM), a mobile hard disk, a magnetic disk, an optical disk or other various media capable of storing program code.

Described above are merely embodiments of the present disclosure, which are not intended to limit the present disclosure, and there may be various changes and variations of the present disclosure for those skilled in the art. Any modifications, equivalent substitutions, improvements and the like made within the spirit and principle of the present disclosure should be encompassed within the scope of the claims of the present disclosure.

## Claims

1. An image deraining network, comprising a first convolutional network and a second convolutional network, wherein
the first convolutional network is configured to perform prediction using an image to be derained on the basis of an improved UNet network, and perform pixel-by-pixel convolution on a first deraining filter kernel obtained by the prediction and the image to be derained to obtain a first derained image; and
the second convolutional network is configured to perform prediction using the first derained image on the basis of the improved UNet network, and perform pixel-by-pixel convolution on a second deraining filter kernel obtained by the prediction and the first derained image to obtain a target derained image **characterized in that** the improved UNet network sequentially comprises a first network layer to a thirteenth network layer, wherein the first network layer to the fourth network layer, the fifth network layer, the seventh network layer, the ninth network layer, and the eleventh network layer are all composite layers; the sixth network layer, the eighth network layer, the tenth network layer, and the twelfth network layer are upsampling layers; the thirteenth network layer is a dilated convolutional layer; and each composite layer comprises two or more of an average pooling layer, a convolutional layer, and an activation layer; and
**in that** dilation rates of the second network layer to the fourth network layer, the seventh network layer, the ninth network layer, and the eleventh network layer are all greater than 1.

2. The image deraining network according to claim 1, **characterized in that** dilation rates of the first network layer to the fourth network layer, the fifth network layer, the seventh network layer, the ninth network layer, and the eleventh network layer increase in a sawtooth pattern.

3. The image deraining network according to claim 1, **characterized in that** the second network layer and the tenth network layer are connected via a skip connection; the third network layer and the eighth network layer are connected via a skip connection, and the fourth network layer and the sixth network layer are connected via a skip connection.

4. The image deraining network according to claim 3, **characterized in that** the seventh network layer comprises a channel attention module, the channel attention module comprising a first input unit, a first average pooling unit, a second average pooling unit, a first fusion unit, a first convolutional unit, a first activation unit, a second convolutional unit, a second activation unit, and a first inner product unit, wherein
the first input unit is connected to the first average pooling unit, the second average pooling unit and the first inner product unit, respectively;
the first average pooling unit and the second average pooling unit are both connected to the first fusion unit; and
the first fusion unit is connected to the first inner product unit sequentially through the first convolutional unit, the first activation unit, the second convolutional unit, and the second activation unit.

5. The image deraining network according to claim 3, **characterized in that** the eleventh network layer comprises a spatial attention module, the spatial attention module comprising a second input unit, a cross-channel average pooling unit, a cross-channel maximum pooling unit, a second fusion unit, a third convolutional unit, a third activation unit, and a second inner product unit, wherein
the second input unit is connected to the cross-channel average pooling unit, the cross-channel maximum pooling unit, and the second inner product unit, respectively;
the cross-channel average pooling unit and the cross-channel maximum pooling unit are both connected to the second fusion unit; and
the second fusion unit is connected to the second inner product unit sequentially through the third convolutional unit and the third activation unit.

6. The image deraining network according to claim 1, **characterized in that** the improved UNet network is based on a UNet network, and extracts features in the raindrop regions by downsampling and restores the image to its original size by upsampling,
the improved UNet network is used to extract features from the raindrop regions of the input image to obtain a deraining filter kernel for each pixel of the input image.

7. The image deraining network according to claim 2, **characterized in that** the dilation rates of the first network layer, the second network layer, the third network layer, and the fourth network layer sequentially correspond to 1, 2, 3, and 5, and
the dilation rates of the fifth network layer, the seventh network layer, the ninth network layer, and the eleventh network layer sequentially correspond to 1, 2, 3, and 4.

8. The image deraining network according to claim 5, **characterized in that** the step of performing pixel-by-pixel convolution on a first deraining filter kernel obtained by the prediction and the image to be derained to obtain a first derained image comprises:
performing pixel-by-pixel convolution on the first deraining filter kernel obtained by the prediction and the image to be derained;
after passing through the eleventh network layer, upsampling the feature map output by the eleventh network layer, followed by a dilated convolution with a kernel size of 1, a stride of 1, a padding of 0, and a dilation rate of 2 to obtain the first deraining filter kernel;
performing pixel-by-pixel convolution on the first deraining filter kernel and the image to be derained to obtain the first derained image.

9. An image deraining network training method, the training method comprising:
obtaining raindrop-free images and images to be derained captured by a vehicle at the same geographic location; and
inputting the images to be derained and the raindrop-free images into the image deraining network according to any one of claims 1 to 8 to train the network and obtain a trained image deraining network.

10. The training method according to claim 9, **characterized in that** the method further comprises:
deploying the trained image deraining network on the hardware platform Nvidia Jetson Xavier, and
performing 8-bit integer quantization on the trained image deraining network.

11. The training method according to claim 10, **characterized in that** the inputting the images to be derained and the raindrop-free images into the image deraining network according to any one of claims 1 to 10 to train the network and obtain a trained image deraining network comprises:
input an image to be derained into the image deraining network, the image is passed through a first convolutional network and a second convolutional network to obtain a target derained image from which raindrops are removed;
during training, a loss value is calculated between the target derained image and an input raindrop-free image, and parameters of the network are continuously adjusted through training iterations, when the training converges, the training is terminated, resulting in a trained image deraining network.

12. An image deraining network training device, comprising a memory (904) and a processor (902), wherein the memory (904) stores a computer program that, when executed by the processor (902), causes the steps of the method according to any one of claims 9 to 11 to be implemented.

13. A computer-readable storage medium, configured to store a computer program that, when executed by a processor (902), causes the steps of the method according to any one of claims 9 to 11 to be implemented.

## Patentansprüche

1. Bildzerstörungsnetzwerk, umfassend ein erstes Faltungsnetzwerk und ein zweites Faltungsnetzwerk, wobei
das erste Faltungsnetzwerk dazu eingerichtet ist, auf Grundlage eines verbesserten UNet-Netzwerks anhand eines zu entregnenden Bildes eine Vorhersage durchzuführen und eine pixelweise Faltung eines durch die Vorhersage erhaltenen ersten Entregnungsfilterkerns mit dem zu entregnenden Bild durchzuführen, um ein erstes entregnetes Bild zu erhalten; und
das zweite Faltungsnetzwerk dazu eingerichtet ist, auf Grundlage des verbesserten UNet-Netzwerks anhand des ersten entregneten Bildes eine Vorhersage durchzuführen und eine pixelweise Faltung eines durch die Vorhersage erhaltenen zweiten Entregnungsfilterkerns mit dem ersten entregneten Bild durchzuführen, um ein entregnetes Zielbild zu erhalten,
**dadurch gekennzeichnet,**
**dass** das verbesserte UNet-Netzwerk nacheinander eine erste Netzwerkschicht bis eine dreizehnte Netzwerkschicht umfasst, wobei die erste bis die vierte Netzwerkschicht, die fünfte Netzwerkschicht, die siebte Netzwerkschicht, die neunte Netzwerkschicht und die elfte Netzwerkschicht jeweils zusammengesetzte Schichten sind; und wobei die sechste, die achte, die zehnte und die zwölfte Netzwerkschicht jeweils Upsampling-Schichten sind, und wobei die dreizehnte Netzwerkschicht eine dilatierte Faltungsschicht ist; und wobei jede zusammengesetzte Schicht mindestens zwei der folgenden Schichten umfasst: eine Average-Pooling-Schicht, eine Faltungsschicht und eine Aktivierungsschicht; und
**dass** die Dilatationsraten der zweiten bis der vierten, der siebten, der neunten und der elften Netzwerkschicht jeweils größer als 1 sind.

2. Bildzerstörungsnetzwerk nach Anspruch 1, **dadurch gekennzeichnet, dass** die Dilatationsraten der ersten bis der vierten, der fünften, der siebten, der neunten und der elften Netzwerkschicht in einem Sägezahnmuster zunehmen.

3. Bildzerstörungsnetzwerk nach Anspruch 1, **dadurch gekennzeichnet, dass** die zweite Netzwerkschicht und die zehnte Netzwerkschicht über eine Skip-Verbindung miteinander verbunden sind; dass die dritte Netzwerkschicht und die achte Netzwerkschicht über eine Skip-Verbindung miteinander verbunden sind und dass die vierte Netzwerkschicht und die sechste Netzwerkschicht über eine Skip-Verbindung miteinander verbunden sind.

4. Bildzerstörungsnetzwerk nach Anspruch 3, **dadurch gekennzeichnet, dass** die siebte Netzwerkschicht ein Kanal-Attention-Modul umfasst, wobei das Kanal-Attention-Modul eine erste Eingabeeinheit, eine erste Average-Pooling-Einheit, eine zweite Average-Pooling-Einheit, eine erste Fusionseinheit, eine erste Faltungseinheit, eine erste Aktivierungseinheit, eine zweite Faltungseinheit, eine zweite Aktivierungseinheit und eine erste Innenprodukteinheit umfasst, wobei die erste Eingabeeinheit jeweils mit der ersten Average-Pooling-Einheit, der zweiten Average-Pooling-Einheit und der ersten Innenprodukteinheit verbunden ist;
die erste Average-Pooling-Einheit und die zweite Average-Pooling-Einheit jeweils mit der ersten Fusionseinheit verbunden sind; und
die erste Fusionseinheit über die erste Faltungseinheit, die erste Aktivierungseinheit, die zweite Faltungseinheit und die zweite Aktivierungseinheit in dieser Reihenfolge mit der ersten Innenprodukteinheit verbunden ist.

5. Bildzerstörungsnetzwerk nach Anspruch 3, **dadurch gekennzeichnet, dass** die elfte Netzwerkschicht ein Spatial-Attention-Modul umfasst, wobei das Spatial-Attention-Modul eine zweite Eingabeeinheit, eine kanalübergreifende Average-Pooling-Einheit, eine kanalübergreifende Max-Pooling-Einheit, eine zweite Fusionseinheit, eine dritte Faltungseinheit, eine dritte Aktivierungseinheit und eine zweite Innenprodukteinheit umfasst, wobei
die zweite Eingabeeinheit jeweils mit der kanalübergreifenden Average-Pooling-Einheit, der kanalübergreifenden Max-Pooling-Einheit und der zweiten Innenprodukteinheit verbunden ist;
die kanalübergreifende Average-Pooling-Einheit und die kanalübergreifende Max-Pooling-Einheit jeweils mit der zweiten Fusionseinheit verbunden sind; und
die zweite Fusionseinheit über die dritte Faltungseinheit und die dritte Aktivierungseinheit in dieser Reihenfolge mit der zweiten Innenprodukteinheit verbunden ist.

6. Bildzerstörungsnetzwerk nach Anspruch 1, **dadurch gekennzeichnet, dass** das verbesserte UNet-Netzwerk auf einem UNet-Netzwerk basiert, durch Downsampling Merkmale in den Regentropfenbereichen extrahiert und durch Upsampling das Bild auf seine ursprüngliche Größe zurückführt,
wobei das verbesserte UNet-Netzwerk dazu verwendet wird, Merkmale aus den Regentropfenbereichen des Eingabebildes zu extrahieren, um für jedes Pixel des Eingabebildes einen Entregnungsfilterkern zu erhalten.

7. Bildzerstörungsnetzwerk nach Anspruch 2, **dadurch gekennzeichnet, dass** die Dilatationsraten der ersten Netzwerkschicht, der zweiten Netzwerkschicht, der dritten Netzwerkschicht und der vierten Netzwerkschicht in dieser Reihenfolge 1, 2, 3 und 5 betragen und
dass die Dilatationsraten der fünften Netzwerkschicht, der siebten Netzwerkschicht, der neunten Netzwerkschicht und der elften Netzwerkschicht in dieser Reihenfolge 1, 2, 3 und 4 betragen.

8. Bildzerstörungsnetzwerk nach Anspruch 5, **dadurch gekennzeichnet, dass** der Schritt des Durchführens einer pixelweisen Faltung eines durch die Vorhersage erhaltenen ersten Entregnungsfilterkerns mit dem zu entregnenden Bild zum Erhalten eines ersten entregneten Bildes Folgendes umfasst:
Durchführen einer pixelweisen Faltung des durch die Vorhersage erhaltenen ersten Entregnungsfilterkerns mit dem zu entregnenden Bild;
nach dem Durchlaufen der elften Netzwerkschicht, Upsampling der von der elften Netzwerkschicht ausgegebenen Merkmalskarte und anschließendes Durchführen einer dilatierten Faltung mit einer Kernelgröße von 1, einer Schrittweite von 1, einem Padding von 0 und einer Dilatationsrate von 2, um den ersten Entregnungsfilterkern zu erhalten;
Durchführen einer pixelweisen Faltung des ersten Entregnungsfilterkerns mit dem zu entregnenden Bild, um das erste entregnete Bild zu erhalten.

9. Bildzerstörungsnetzwerk-Trainingsverfahren, wobei das Trainingsverfahren Folgendes umfasst:
Erhalten von regentropfenfreien Bildern und von zu entregnenden Bildern, die von einem Fahrzeug an demselben geografischen Ort aufgenommen wurden; und
Eingeben der zu entregnenden Bilder und der regentropfenfreien Bilder in das Bildzerstörungsnetzwerk nach einem der Ansprüche 1 bis 8, um das Netzwerk zu trainieren und ein trainiertes Bildzerstörungsnetzwerk zu erhalten.

10. Trainingsverfahren nach Anspruch 9, **dadurch gekennzeichnet, dass** das Verfahren ferner Folgendes umfasst:
Bereitstellen des trainierten Bildzerstörungsnetzwerks auf der Hardwareplattform Nvidia Jetson Xavier und Durchführen einer 8-Bit-Ganzzahlquantisierung des trainierten Bildzerstörungsnetzwerks.

11. Trainingsverfahren nach Anspruch 10, **dadurch gekennzeichnet, dass** das Eingeben der zu entregnenden Bilder und der regentropfenfreien Bilder in das Bildzerstörungsnetzwerk nach einem der Ansprüche 1 bis 10, um das Netzwerk zu trainieren und ein trainiertes Bildzerstörungsnetzwerk zu erhalten, Folgendes umfasst:
Eingeben eines zu entregnenden Bildes in das Bildzerstörungsnetzwerk, wobei das Bild ein erstes Faltungsnetzwerk und ein zweites Faltungsnetzwerk durchläuft, um ein entregnetes Zielbild zu erhalten, aus dem Regentropfen entfernt sind;
Berechnen eines Verlustwerts zwischen dem entregneten Zielbild und einem eingegebenen regentropfenfreien Bild während des Trainings und fortlaufendes Anpassen von Parametern des Netzwerks durch Trainingsiterationen, wobei das Training beendet wird, wenn es konvergiert, wodurch ein trainiertes Bildzerstörungsnetzwerk erhalten wird.

12. Bildzerstörungsnetzwerk-Trainingsvorrichtung, umfassend einen Speicher (904) und einen Prozessor (902), wobei in dem Speicher (904) ein Computerprogramm gespeichert ist, das bei seiner Ausführung durch den Prozessor (902) bewirkt, dass die Schritte des Verfahrens nach einem der Ansprüche 9 bis 11 ausgeführt werden.

13. Computerlesbares Speichermedium, das zum Speichern eines Computerprogramms eingerichtet ist, das bei seiner Ausführung durch einen Prozessor (902) bewirkt, dass die Schritte des Verfahrens nach einem der Ansprüche 9 bis 11 ausgeführt werden.

## Revendications

1. Un réseau de débruitage de gouttes de pluie sur des images, comprenant un premier réseau convolutif et un deuxième réseau convolutif, dans lequel :
le premier réseau convolutif est configuré pour effectuer la prédiction en utilisant une image à débruiter sur la base d'un réseau UNet amélioré, et effectuer une convolution pixel par pixel sur un premier noyau de filtre de débruitage obtenu par la prédiction et l'image à débruiter pour obtenir une première image débruitée ; et le deuxième réseau convolutif est configuré pour effectuer la prédiction en utilisant la première image débruitée sur la base du réseau UNet amélioré, et effectuer une convolution pixel par pixel sur un deuxième noyau de filtre de débruitage obtenu par la prédiction et la première image débruitée afin d'obtenir une image débruitée cible, **caractérisée en ce que** réseau UNet amélioré comprend séquentiellement une première couche réseau vers une treizième couche réseau, dans lequel la première couche réseau à la quatrième couche réseau, la cinquième couche réseau, la septième couche réseau, la neuvième couche réseau et la onzième couche réseau sont toutes des couches composites ; la sixième couche réseau, la huitième couche réseau, la dixième couche réseau et la douzième couche réseau sont des couches de suréchantillonnage ; la treizième couche réseau est une couche convolutive dilatée ; et chaque couche composite comprend deux couches ou plus d'une couche regroupement moyen, une couche convolutive et une couche d'activation ; et
**en ce que** les taux de dilatation de la deuxième couche réseau vers la quatrième couche réseau, la septième couche réseau, la neuvième couche réseau et la onzième couche réseau sont tous supérieurs à 1.

2. Réseau de débruitage d'images selon la revendication 1. **caractérisé en ce que** les taux de dilatation de la première couche réseau vers la quatrième couche réseau, la cinquième couche réseau, la septième couche réseau, la neuvième couche réseau et la onzième couche réseau augmentent selon un motif en dents de scie.

3. Réseau de débruitage d'images selon la revendication 1, **caractérisé en ce que** la deuxième couche réseau et la dixième couche réseau sont connectées via une connexion à saut ; la troisième couche réseau et la huitième couche réseau sont connectées via une connexion à saut, et la quatrième couche réseau et la sixième couche réseau sont connectées via une connexion à saut.

4. Réseau de débruitage d'images selon la revendication 3. **caractérisé en ce que** la septième couche réseau comprend un module d'attention de canal, le module d'attention de canal comprenant une première unité d'entrée, une première unité regroupement moyen, une deuxième unité regroupement moyen, une première unité de fusion, une première unité convolutive, une première unité d'activation, une deuxième unité convolutive, une deuxième unité d'activation et une première unité de produit interne,
dans lequel
la première unité d'entrée est reliée respectivement à la première unité regroupement moyen, à la deuxième unité regroupement moyen et à la première unité de produit interne ;
la première unité regroupement moyen et la deuxième unité regroupement moyen sont toutes deux connectées à la première unité de fusion ; et
la première unité de fusion est connectée séquentiellement à la première unité de produit interne via la première unité convolutive, la première unité d'activation, la deuxième unité convolutive et la deuxième unité d'activation.

5. Réseau de débruitage d'images selon la revendication 3, **caractérisé en ce que** la onzième couche réseau comprend un module d'attention spatiale, le module d'attention spatiale comprend une deuxième unité d'entrée, une unité de regroupement moyen multicanal, une unité de regroupement maximal multicanal, une deuxième unité de fusion, une troisième unité convolutive, une troisième unité d'activation et une deuxième unité de produit interne, dans lequel
la deuxième unité d'entrée est connectée respectivement à l'unité de regroupement moyen multicanal, à l'unité de regroupement maximal multicanal et à la deuxième unité de produit interne ;
l'unité de regroupement moyen multicanal et l'unité de regroupement maximal multicanal sont toutes deux connectées à la deuxième unité de fusion ; et
la deuxième unité de fusion est connectée séquentiellement à la deuxième unité de produit interne via la troisième unité convolutive et la troisième unité d'activation.

6. Réseau de débruitage d'image selon la revendication 1, **caractérisé en ce que** le réseau UNet amélioré est basé sur un réseau UNet, et extrait des caractéristiques des régions de gouttes de pluie par sous-échantillonnage et restaure l'image à sa taille d'origine par un suréchantillonnage,
le réseau UNet amélioré est utilisé pour extraire des caractéristiques des régions de gouttes de pluie de l'image d'entrée afin d'obtenir un noyau de filtre de débruitage pour chaque pixel de l'image d'entrée.

7. Réseau de débruitage d'image selon la revendication 2, **caractérisé en ce que** les taux de dilatation de la première couche réseau, de la deuxième couche réseau, de la troisième couche réseau et de la quatrième couche réseau correspondent séquentiellement à 1, 2, 3 et 5, et
les taux de dilatation de la cinquième couche réseau, septième couche réseau, neuvième et onzième couche réseau correspondent séquentiellement à 1, 2, 3 et 4.

8. Réseau de débruitage d'image selon la revendication 5, **caractérisé en ce que** l'étape consistant à effectuer une convolution pixel par pixel sur un premier noyau filtre de débruitage obtenue par la prédiction et l'image à débruiter pour obtenir une première image débruitée comprend :
effectuer une convolution pixel par pixel sur le premier noyau de filtre de débruitage obtenue par la prédiction et l'image à débruiter ;
après avoir traversé la onzième couche réseau, suréchantillonner la carte de caractéristiques produite par la onzième couche réseau, suivie d'une convolution dilatée avec une taille de noyau de 1, un pas de 1, un remplissage de 0, et un taux de dilatation de 2 pour obtenir le premier noyau de filtre de débruitage ;
effectuer une convolution pixel par pixel sur le premier noyau de filtre de débruitage et sur l'image à débruiter pour obtenir la première image débruitée.

9. Procédé d'entraînement de réseau de débruitage d'images, le procédé d'entraînement comprenant :
obtenir des images sans gouttes de pluie et des images à débruiter capturées par un véhicule au même emplacement géographique ; et
entrer les images à débruiter et les images sans gouttes de pluie dans le réseau de débruitage d'images selon l'une des revendications 1 à 8 afin d'entraîner le réseau et d'obtenir un réseau entraîné de débruitage.

10. Procédé d'entraînement selon la revendication 9. **caractérisé en ce que** le procédé comprend également : déployer le réseau entraîné de débruitage d'image sur la plateforme matérielle Nvidia Jetson Xavier, et effectuer la quantification d'entiers 8 bits sur le réseau entraîné de débruitage d'image.

11. Procédé d'entraînement selon la revendication 10. **caractérisé en ce que** l'entrée des images à débruiter et des images sans gouttes de pluie dans le réseau de débruitage d'images, selon l'une des revendications 1 à 10 pour entraîner le réseau et obtenir un réseau entraîné de débruitage, comprend :
saisir une image à débruiter dans le réseau de débruitage d'image, l'image passant à travers un premier réseau convolutif puis un deuxième réseau convolutif pour obtenir une image cible débruitée dont les gouttes de pluie sont retirées ;
pendant l'entraînement, une valeur de perte est calculée entre l'image débruitée cible et une image d'entrée sans gouttes de pluie, et les paramètres du réseau sont continuellement ajustés par itérations d'entraînement ; lorsque l'entraînement converge, l'entraînement est terminé, donnant un réseau entraîné de débruitage d'image.

12. Dispositif d'entraînement de réseau de débruitage d'image, comprenant une mémoire (904) et un processeur (902). dans lequel la mémoire (904) stocke un programme informatique qui, lorsqu'il est exécuté par le processeur (902), entraîne l'application des étapes du procédé selon l'une des revendications 9 à 11.

13. Support de stockage lisible par ordinateur, configuré pour stocker un programme informatique qui, lorsqu'il est exécuté par un processeur (902), entraîne l'application des étapes du procédé selon l'une des revendications 9 à 11.
